# EUROPÄISCHE PATENTSCHRIFT

(11) **EP 2 456 561 B1**
(45) Veröffentlichungstag und Bekanntmachung des Hinweises auf die Patenterteilung: **18.02.2015**
(21) Anmeldenummer: 10747140.1
(22) Anmeldetag: 08.07.2010
(51) Int. Cl.: B04C 5/04, B04C 5/081, B04C 5/13, B04C 5/14

(54) **ZYKLON MIT EINER REINGASLEITUNG**
CYCLONE WITH A CONDUIT FOR CLEAN GAS
CYCLONE AVEC CONDUIT D'ADMISSION DE GAZ ÉPURÉ

(30) Priorität: 23.07.2009 AT 46509 U
(43) Veröffentlichungstag der Anmeldung: 30.05.2012
(73) Patentinhaber: Binder + Co AG, 8200 Gleisdorf (AT)
(72) Erfinder: BRUNNMAIR, Erwin, A-8045 Graz (AT)
(74) Vertreter: KLIMENT & HENHAPEL
(86) Internationale Anmeldenummer: PCT/AT2010/000250
(87) Internationale Veröffentlichungsnummer: WO 2011/009148

(56) Entgegenhaltungen:
- DE-A1- 2 047 534
- DE-U1-202008 003 366
- FR-A1- 2 281 791
- US-A- 4 134 827

## Beschreibung

Zyklon zur Abscheidung von Feststoffteilchen aus einem Abgasstrom, umfassend ein Gehäuse mit einem vorzugsweise zumindest abschnittsweise zylindrischen Mantelbereich, einem Deckenbereich und einem Bodenbereich sowie einer Eintrittsöffnung zum Beschicken des Zyklons und eine in diese mündende Abgasleitung für den mit Feststoffteilchen vermengten Abgasstrom, sowie einer Austragöffnung für die aus dem Abgasstrom abgeschiedenen Feststoffteilchen, wobei ein Tauchrohr vorgesehen ist, welches den Deckenbereich oder den Bodenbereich durchsetzt und einen in das Innere des Gehäuses hineinragenden, als Austrittsöffnung für den gereinigten Abgasstrom aus dem Gehäuse dienenden offenen Endbereich aufweist, gemäß dem Oberbegriff des Anspruchs 1 sowie Verfahren zur Abscheidung von Feststoffteilchen aus einem Abgasstrom mittels eines Zyklons, wobei der in einer Abgasleitung transportierte, abzuscheidende Feststoffteilchen enthaltende Abgasstrom durch ein Gehäuse des Zyklons geführt und schließlich durch eine Austrittsöffnung aus dem Gehäuse abgeführt wird, wobei im Zuge des Führens des Abgasstroms durch das Gehäuse die durch Zentrifugalkräfte an die Innenwandung des Gehäuses geschleuderten Feststoffteilchen absinken und durch eine im Gehäuse vorgesehene Abführöffnung abgeführt werden gemäß dem Oberbegriff des Anspruchs 8.

Zyklone zur Abscheidung von Feststoffen bzw. von Stäuben aus einem Abgasstrom sind aus dem Stand der Technik bereits hinreichend bekannt.

Ein gattungsgemäßer, z.B. in der DE 601 17 051 offenbarter Zyklon umfasst hierbei ein im Wesentlichen senkrecht angeordnetes Gehäuse z.B. aus Stahlblech, dessen Inneres von einem im Wesentlichen zylindrischen Mantelbereich, einem Deckenbereich und einem Bodenbereich begrenzt wird.

Das Gehäuse weist eine Eintrittsöffnung auf, die als Öffnung im Mantelbereich des Zyklons ausgebildet ist und über welche der Zyklon beschickt wird, dh. über welche Gasströme in das Innere des Zyklons befördert werden können.

Der mit Feststoffteilchen vermengte und zu reinigende Abgasstrom wird dabei in einer Abgasleitung zum Zyklon transportiert. Die Abgasleitung mündet in die Eintrittsöffnung. Abgasleitung und Zyklon sind in der Regel so ausgerichtet, dass die Zufuhr des zu reinigenden Abgasstroms tangential in Bezug auf einen gedachten, zur Achse des Zyklon konzentrischen Kreises erfolgt.

Die Austrittsöffnung des Zyklons wird durch einen offenen Endbereich eines Tauchrohrs ausgebildet, welches in das Innere des Gehäuses hineinragt und den Decken- oder Bodenbereich, je nach Lage des Zyklons in Betriebsposition, durchsetzt. Üblicherweise aber nicht notwendigerweise wird der Zyklon so betrieben werden, dass das Tauchrohr den Deckenbereich des Zyklons durchdringend angeordnet ist.

Während der Abgasstrom in einer im Wesentlichen spiralförmigen Bahn das Innere des Gehäuses passiert, werden die im Abgasstrom mitgeführten Feststoffteilchen durch Zentrifugalkräfte an die Innenwandung des Gehäuses geschleudert und fallen, der Schwerkraft folgend, in den Bodenbereich des Gehäuses und über zumindest eine Austragöffnung in einen angeschlossenen Abscheidebehälter.

Die im Abscheidebehälter des Gehäuses gesammelten Feststoffteilchen werden in weiterer Folge abgeführt und können z.B. brikettiert und als Brennstoff weiterverwertet werden.

Zunehmendes Umweltbewusstsein und eine im Zuge technischer Prozessoptimierungen geforderte Kreislaufschließung bzw. Einsatzstofferückgewinnung stellen erhöhte Anforderungen an die industrielle Separationstechnik.

Neben der Methode der Fliehkraftentstaubung durch beschriebene Zyklone sind am Markt vor allem E-Filter und Sackfilter im Einsatz. Letztere zeichnen sich zwar durch eine hohe Entstaubungsleistung aus, welche jedoch nur unter Inkaufnahme erheblicher Betriebs- und Energiekosten erzielt wird.

Fliehkraftentstaubung bzw. Zyklone weisen demgegenüber ein viel einfacheres Funktionsprinzip auf und sind energie- und ressourcenschonender, was auch in umweltschutztechnischer Hinsicht als Vorteil zu werten ist. Jedoch ist die mit konventionellen Zyklonen erzielbare Trennschärfe und Abscheideleistung oft nicht mehr ausreichend, um den aktuellen Normen und gesetzlichen Anforderungen genüge zu tun.

Einer der Hauptgründe hierfür ist die Ausbildung einer eine gegenüber dem Abgasstrom erhöhte Konzentration an Feststoffteilchen aufweisende Grenzschichtströmung, welche sich im Bereich des vom Tauchrohr durchdrungenen Boden- oder Deckenbereichs des Zyklons sowie entlang der Mantelfläche des in das Innere des Zyklons ragenden Tauchrohrs ausbildet.

Diese Grenzschichtströmung kommt durch Reibung des Abgasstromes an den beschriebenen Bereichen zustande. Der im Inneren des Gehäuses im Wesentlichen spiralförmig rotierende Abgasstrom kommt also im Bereich des Tauchrohres annähernd zum Stillstand, so dass sich durch den daraus resultierenden Stau die unerwünschte Grenzschichtströmung ausbildet.

Sinn und Zweck des Tauchrohres ist es, die in der Grenzschichtströmung vorhandene Ansammlung an Feststoffteilchen daran zu hindern, in eine im Boden- oder Deckenbereich angeordnete Austrittsöffnung des Gehäuses zu gelangen. Durch Einsatz eines Tauchrohres wird diese Austrittsöffnung weiter in das Innere des Zyklons verlagert.

Allerdings bewirken innerhalb des Zyklons auftretende turbulente Vermischungen der Grenzschichtströmung mit dem durch die Austrittsöffnung abgeführten gereinigten Abgasstrom, weiterhin einen Austrag der Feststoffteilchen aus der Grenzschichtströmung durch die Austrittsöffnung, wenngleich der Austrag geringer ist also ohne Einsatz eines Tauchrohres.

Mit anderen Worten bewirkt die sich ausbildende Grenzschichtströmung den Austrag von Feststoffteilchen über den an und für sich gereinigten Abgasstrom, wodurch die Abscheideleistung des Zyklons negativ beeinflusst wird.

Es wurden bereits Maßnahmen vorgeschlagen, um den Staubgehalt der innerhalb des Zyklons auftretenden Grenzschichtströmung zu verringern, bzw. die Grenzschichtströmung zu zerstören, welche jedoch keine zufriedenstellenden Ergebnisse brachten. So wurden etwa Versuche unternommen, die mit Feststoffteilchen beladene Grenzschicht abzusaugen und an einer von der Austrittsöffnung entfernten Stelle des Gehäuses wieder in das Innere des Zyklons zurückzuleiten.

Des Weiteren ist es bekannt, Reinluft mittels Düsen im Deckenbereich des Zyklongehäuses in das Innere des Zyklons einzublasen und dadurch die Grenzschichtströmung zu verwirbeln.

Die bei der Bekämpfung der Grenzschicht entstehenden Verwirbelungen bewirken jedoch einen hinsichtlich der Abscheidung der Feststoffteilchen kontraproduktiven Effekt.

In diesem Zusammenhang ist auch die FR 2 281 791 A zu sehen, die einen Zyklon mit einer Zufuhreinrichtung für Beschleunigungsluft im bzw. am Zulauf offenbart, um die Grenzschichtströmung zu zerstören.

Die DE 29 25 245 A1 offenbart einen Zyklon mit einer zwei Schneckengänge umfassenden Schnecke, wobei der erste Schneckengang mit einem Abgasstrom und der zweite Schneckengang mit Reingas beschickt wird. Das Reingas wird getrennt vom Abgasstrom in den Zyklon befördert.

Die DE 42 17 016 A1 offenbart ein Tauchrohr für Zyklone. Die Vorsehung einer Reingasleitung ist nicht offenbart.

Die DE 43 13 337 A1 offenbart einen Zyklon mit einem gegen dessen Symmetrieachse geneigten Zuströmkanal. Eine Zufuhr von Reingas ist nicht offenbart.

Der vorliegenden Erfindung liegt die Aufgabe zugrunde, die Nachteile konventioneller Zyklone zu vermeiden, und eine verbesserte Abscheidung von Feststoffteilchen aus einem in einen Zyklon geführten, mit Feststoffteilchen verunreinigten Abgasstrom , durch Maßnahmen zur Bekämpfung der eine erhöhte Konzentration an Feststoffteilchen aufweisenden Grenzschichtströmung zu ermöglichen.

Erfindungsgemäß wird diese Aufgabe durch eine Vorrichtung mit den kennzeichnenden Merkmalen des Anspruchs 1 und ein Verfahren mit den kennzeichnenden Merkmalen des Anspruchs 9 erreicht. Ein gattungsgemäßer Zyklon zur Abscheidung von Feststoffteilchen aus einem Abgasstrom umfasst ein Gehäuse mit einem vorzugsweise zumindest abschnittsweise zylindrischen Mantelbereich, einem Deckenbereich und einem Bodenbereich sowie einer Eintrittsöffnung zum Beschicken des Zyklons und eine in diese mündende Abgasleitung für den mit Feststoffteilchen vermengten Abgasstrom, sowie einer Abführöffnung für die aus dem Abgasstrom abgeschiedenen Feststoffteilchen, wobei ein Tauchrohr vorgesehen ist, welches den Deckenbereich oder den Bodenbereich durchsetzt und einen in das Innere des Gehäuses hineinragenden, als Austrittsöffnung für den gereinigten Abgasstrom aus dem Gehäuse dienenden offenen Endbereich aufweist. Erfindungsgemäß ist mindestens eine der Zufuhr von Reingas dienende Reingasleitung vorgesehen, welche entweder in Strömungsrichtung des Abgasstroms gesehen vor der Eintrittsöffnung in einen in der Abgasleitung vorgesehenen Einmündungsbereich mündet oder direkt in die Eintrittsöffnung mündet und welches Reingas einem Innenwandungsabschnitt des Gehäuses zugeführt wird, an welchem sich ohne Zufuhr des Reingases eine gegenüber dem mit Feststoffteilchen vermengten Abgasstrom erhöhte Konzentration an Feststoffteilchen aufweisende Grenzschichtströmung ausbilden würde.

Als Eintrittsöffnung wird dabei eine Öffnung im Mantelbereich des Zyklons verstanden, durch welche Gasströme in das Innere des Zyklons eintreten können.

Als Reingas wird in diesem Zusammenhang ein Fluid verstanden, welches eine höhere Reinheit bzw. einen geringeren Anteil an Feststoffteilchen aufweist als der mittels des Zyklons zu reinigende Abgasstrom. Vorzugsweise wird als Reingas Umgebungsluft eingesetzt.

Erfindungsgemäß wird somit das Reingas dazu verwendet, die hinsichtlich des erzielbaren Abscheidegrades negative Auswirkungen habende, eine erhöhte Konzentration an Feststoffteilchen aufweisende Grenzschichtströmung zu ersetzen oder mit anderen Worten wird an jenen Innenwandungsabschnitt im Inneren des Zyklons, an welchem sich unter normalen Bedingungen die mit Feststoffteilchen aufgeladene Grenzschichtströmung ausbilden würde, Reingas geleitet, so dass sich die Grenzschichtströmung lediglich mit Reingas bzw. mit einem hohen Anteil an Reingas aber ohne bzw. mit geringerer Feststoffteilchenkonzentration ausbildet.

Als wesentlich wird es dabei angesehen, das Reingas nicht direkt in die Grenzschicht einzublasen sondern das Reingas so in den Zyklon zu leiten, dass der Abgasstrom möglichst wenig beeinflusst wird, das Reingas sozusagen Bestandteil des Abgasstromes werden zu lassen, ohne aber eine Vermischung zu bewirken. Dies gelingt nur, wenn das Reingas möglichst rechtzeitig dem Strömungsverhalten des Abgasstromes angepasst wird was Strömungsrichtung und Strömungsgeschwindigkeit betrifft und die Einbringung des Reingasstroms in den Abgasstrom möglichst ohne Turbulenzen erfolgt, so dass die beiden Ströme praktisch laminar nebeneinander in den Zyklon eingebracht werden können.

Erfindungsgemäß ist es daher erforderlich, den Reingasstrom entweder direkt in die Eintrittsöffnung zu leiten oder aber bevorzugterweise bereits vor der Eintrittsöffnung dem Abgasstrom zuzuleiten. Je früher das Reingas sich an die Strömungseigenschaften des Abgasstromes anpassen kann, desto besser kann das Reingas jenem Innenwandungsabschnitt des Zyklons zugeführt werden, an welchem sich im Normalfall die negativ behaftete, eine erhöhte Konzentration an Feststoffteilchen aufweisende Grenzschichtströmung ausbilden würde.

Erfindungsgemäß handelt es sich bei diesem Innenwandungsabschnitt um jene Innenoberfläche des Zyklons, die gebildet wird durch den vom Tauchrohr durchsetzten Decken- oder Bodenbereich sowie den daran anschließenden, in das Innere des Gehäuses hineinragenden Mantel des Tauchrohres. Für den Fall, dass die Reingasleitung vor der Eintrittsöffnung in die Abgasleitung mündet, ist es gemäß einer besonders bevorzugten Variante der Erfindung vorgesehen, dass der Einmündungsbereich für die Reingasleitung an jener Querschnittshälfte der Abgasleitung angeordnet ist, welche, betrachtet in einer der Längsachse der Abgasleitung folgenden Blickrichtung, jenem Abschnitt des Gehäuses näher ist, welcher vom Tauchrohr durchsetzt wird.

Dadurch wird die Möglichkeit geschaffen, das Reingas vom Abgasstrom mitreißen zu lassen bei gleichzeitiger Minimierung der Weglänge, welche das Reingas bis zum oben beschriebenen Innenwandungsabschnitt zurücklegen muss.

Zusätzlich kann es gemäß einer weiteren bevorzugten Ausführungsvariante der Erfindung vorgesehen sein, im Bereich der Eintrittsöffnung des Gehäuses und/oder im Einmündungsbereich der Reingasleitung in die Abgasleitung eine Leitvorrichtung anzuordnen, welche das Reingas in Richtung des oben beschriebenen Innenwandungsabschnittes lenkt.

Prinzipiell ist anzumerken, dass das Vorsehen von Leitvorrichtungen nicht zwingendermaßen erforderlich ist, um das Reingas auf den oben beschriebenen Innenwandungsabschnitt zu leiten, da der Fachmann in Kenntnis der Strömungsverhältnisse des Abgasstromes durch geschickte Wahl der Position des Einmündungsbereichs sowie Wahl der Strömungsgeschwindigkeit und Strömungsrichtung, mit welcher das Reingas entweder über die Eintrittsöffnung direkt in den Zyklon eingebracht oder über den Einmündungsbereich in die Abgasleitung eingebracht wird, bereits dafür Sorge tragen kann, dass das Reingas dem oben beschriebenen Innnenwandungsabschnitt zugeführt wird.

In einer fertigungstechnisch und strömungstechnisch besonders vorteilhaften Ausführungsvariante der Erfindung ist es vorgesehen, dass die Reingasleitung zumindest abschnittsweise einen Teilquerschnitt der Abgasleitung bildet und diese als Schachtelement ausgebildet ist, wobei innerhalb des Schachtelementes mindestens eine Trennwandung angeordnet ist, welche das Reingas vom Abgasstrom trennt.

Hierbei ist eine Ausführungsvariante besonders bevorzugt, bei welcher die mindestens eine Trennwandung zumindest abschnittsweise parallel zu einer vorzugsweise horizontal verlaufenden Längsachse des Schachtelementes verläuft. Vorzugsweise weist das Schachtelement einen rechteckigen Querschnitt auf, wobei die Trennwandung als Platte ausgeführt ist, welche mit ihren Seitenkanten an zwei im Wesentlichen vertikal verlaufenden Seitenwandungen des Schachtelementes angrenzt.

Gemäß einer weiteren bevorzugten Ausführungsvariante der Erfindung ist es vorgesehen, dass der Deckenbereich oder Bodenbereich des Gehäuses des Zyklons eben in eine Seitenwandung der Abgasleitung oder der Reingasleitung übergeht

Dadurch ist gewährleistet, dass das Reingas bzw. ein Großteil des eingebrachten Reingases entlang der Seitenwandung direkt auf den oben beschriebenen Innenwandungsbereich des Zyklons geleitet wird und dort die Grenzschichtströmung ausbilden kann.

Anspruch 8 richtet sich auf ein Verfahren zur Abscheidung von Feststoffteilchen aus einem Abgasstrom mittels eines Zyklons, wobei der in einer Abgasleitung transportierte, abzuscheidende Feststoffteilchen enthaltende Abgasstrom durch das Gehäuse des Zyklons geführt und schließlich durch eine Austrittsöffnung aus dem Gehäuse abgeführt wird, wobei im Zuge des Führens des Abgasstroms durch das Gehäuse die durch Zentrifugalkräfte an die Innenwandung des Gehäuses geschleuderten Feststoffteilchen absinken und durch eine im Gehäuse vorgesehene Abführöffnung abgeführt werden. Erfindungsgemäß ist vorgesehen, dass dem in der Abgasleitung transportierten, die abzuscheidenden Feststoffteilchen enthaltenden Abgasstrom vor oder bei Eintritt in das Gehäuse Reingas zugeführt wird, welches in weiterer Folge einem Innenwandungsabschnitt des Gehäuses zugeführt wird, an welchem sich ohne Zufuhr des Reingases eine gegenüber dem mit Feststoffteilchen vermengten Abgasstrom erhöhte Konzentration an Feststoffteilchen aufweisende Grenzschichtströmung ausbilden würde.

Die hierbei erzielten Vorteile ergeben sich analog zu den bereits zu den Vorrichtungsansprüchen erwähnten Vorteilen.

Um eine möglichst geringe Verwirbelung des Reingasstromes mit dem in der Abgasleitung geführten, verschmutzten Abgasstrom zu ermöglichen, ist es in einer bevorzugten Verfahrensvariante vorgesehen, dass das Reingas vor dem Eintritt in das Gehäuse des Zyklons zumindest abschnittsweise im Wesentlichen parallel zur Strömungsrichtung des Abgasstroms geführt wird.

Gemäß einer weiteren bevorzugten Verfahrensvariante wird das Reingas im Wesentlichen tangential in das Gehäuse geführt. Es ergibt sich auf diese Weise ein strömungstechnisch vorteilhaftes, im Wesentlichen spiralförmiges Einströmen des Reingasstromes in das Gehäuse.

Erfindungsgemäß kann das Reingas mittels eines Gebläses entweder eingeblasen werden oder aber eingesaugt werden, je nachdem an welcher Stelle das Gebläse angeordnet ist.

Ein besonders wirtschaftliche Entstaubung wird erzielt, indem gemäß einer bevorzugten Ausführungsvariante des erfindungsgemäßen Verfahrens die dem Abgasstrom zugeführte Menge an Reingas 1-5%, vorzugsweise 2-3% (Volumsprozent) des in den Zyklon eintretenden Gasvolumenstroms beträgt.

Gemäß einer weiteren bevorzugten Ausführungsvariante der Erfindung ist es vorgesehen, dass die Temperatur des Reingases geringer ist als die Temperatur des Abgasstroms, wodurch auch die thermische Belastung des Tauchrohres verringert und damit dessen Lebensdauer verlängert werden kann.

Eine besonders bevorzugte Ausführungsvariante der Erfindung sieht vor, dass die Strömungsgeschwindigkeit des Reingases im Bereich des Eintritts in den Zyklon 80% bis 120%, vorzugsweise 90% bis 110% der Strömungsgeschwindigkeit des Abgasstroms beträgt. Unter diesen Bedingungen setzt sich die sich ausbildende Grenzschichtströmung nahezu ausschließlich aus Reingas zusammen.

Die Erfindung wird nun anhand eines Ausführungsbeispiels näher erläutert. Dabei zeigt:
- Fig.1: eine schematische Vertikalschnittdarstellung eines erfindungsgemäßen Zyklons
- Fig.2: eine Horizontalschnittdarstellung einer Ausführungsvariante eines erfindungsgemäßen Zyklons gemäß Schnittlinie A-A in Fig.1
- Fig.3: eine schematische Vertikalschnittdarstellung einer alternativen Ausführungsvariante eines erfindungsgemäßen Zyklons
- Fig.4: eine Horizontalschnittdarstellung einer alternativen Ausführungsvariante eines erfindungsgemäßen Zyklons gemäß Schnittlinie A-A in Fig.3
- Fig.5: eine Horizontalschnittdarstellung einer alternativen Ausführungsvariante eines erfindungsgemäßen Zyklons gemäß Schnittlinie A-A in Fig.3

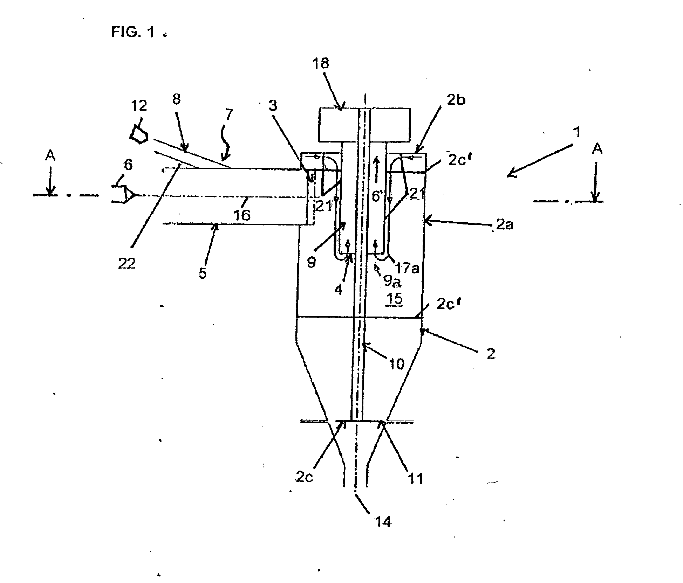

Fig.1 zeigt eine erste Ausführungsvariante eines erfindungsgemäßen Zyklons 1, umfassend ein im Wesentlichen senkrecht angeordnetes, aus Stahlblech gefertigtes Gehäuse 2 mit einem im Wesentlichen zylindrischen bzw. rohrförmigen Mantelbereich 2a, der an seiner oberer Stirnseite durch einen Deckenbereich 2b und an seiner unteren Stirnseite durch einen Bodenbereich 2c abgeschlossen ist.

Das Gehäuse 2 weist in einem zum Deckenbereich 2b benachbarten Abschnitt des Mantelbereichs 2a eine Eintrittsöffnung 3 auf, über welche das Innere 15 des Zyklons 1 mit einem Abgasstrom 6 beschickt werden kann. Im vorliegenden Ausführungsbeispiel mündet in die Eintrittsöffnung 3 eine schachtförmige, im Wesentlichen horizontal verlaufende Abgasleitung 5 für einen zu reinigenden Abgasstrom 6. Der in das Gehäuse 2 des Zyklons 1 eintretende Abgasstrom 6 ist verunreinigt und umfasst ein gewisses Quantum an Feststoffen wie beispielsweise Staub- oder Rußpartikel.

An diese Stelle sei angemerkt, dass aus fertigungstechnischen Gründen der Mantelbereich 2a oder ein Abschnitt davon auch physischer Bestandteil der Abgasleitung 5 sein kann, wie dies in Fig.1 beispielhaft durch die Linien 2c' angedeutet ist, wodurch ein Abschnitt des Mantelbereichs 2a und die Abgasleitung 5 auch einstückig gefertigt sein können. Im Sinne der vorliegenden Erfindung wird jedoch auch bei einer solchen Ausführungsvariante der Mantelbereich 2a bzw. der Abschnitt davon als dem Zyklon zugehörend angesehen und die Eintrittsöffnung 3 als Öffnung in diesem Mantelbereich 2a definiert.

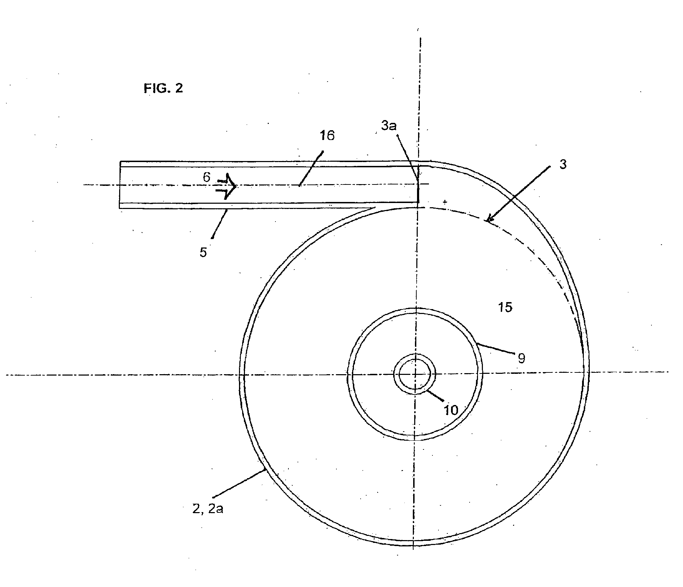

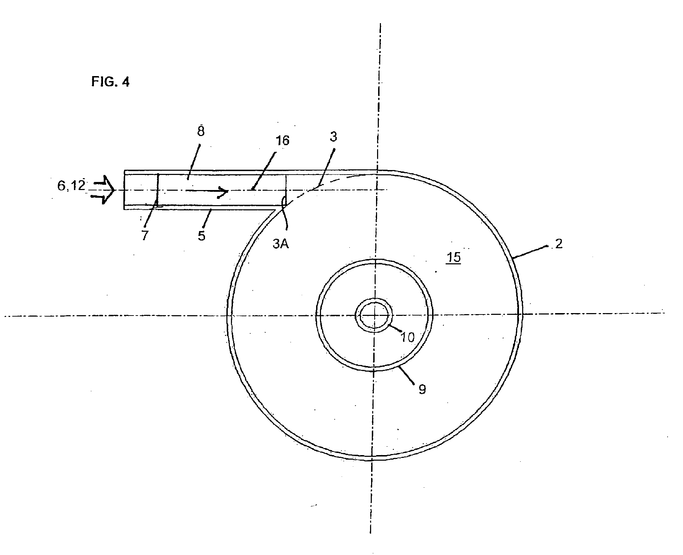

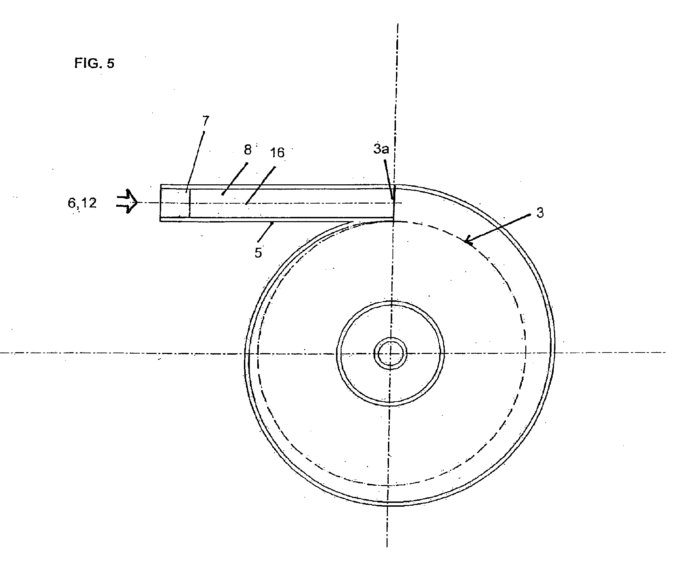

Fig.2, Fig.4 bzw. Fig.5 zeigen unterschiedliche Geometrien aufweisende Eintrittsöffnungen 3 (strichliert gezeichnet). In einer bevorzugten Ausführungsvariante der Erfindung wird als Eintrittsöffnung 3 jene in den Fig.2,4 und 5 mit 3a bezeichnete Querschnittsebene der Abgasleitung 5 angesehen. Dabei handelt es sich um die letzte normal zur Längsachse 16 der Abgasleitung 5 verlaufende, vollständige Querschnittsebene 3a der Abgasleitung 5. Da eine wesentliche Voraussetzung für die Verdrängung der eine erhöhte Konzentration an Feststoffteilchen aufweisenden Grenzschichtströmung durch eine weniger belastete Grenzschichtströmung eine rechtzeitige Anpassung der Reingasströmung an die Abgasströmung ist, ist es in der Mehrheit der Fälle erforderlich, dass eine solche Anpassung bereits in der Abgasleitung 5 erfolgt.

Das von Mantelbereich 2a, Deckenbereich 2b und Bodenbereich 2c umschlossene Innere 15 des Gehäuses 2 dient als Expansionskammer für den aus der Abgasleitung 5 austretenden Abgasstrom 6.

Die Eintrittsöffnung 3 bzw. die Abgasleitung 5 sind so angeordnet, dass ein im Wesentlichen tangentiales Einströmen des Abgasstroms 6 in den im Wesentlichen zylindrischen Querschnitt des Gehäuses 2 stattfindet. Die im Wesentlichen horizontale Längsachse 16 der Abgasleitung 5 verläuft also versetzt und in einer Normalebene zu einer im Wesentlichen vertikalen Längsachse 16 des Gehäuses 2 angeordnet.

Das Gehäuse 2 des Zyklons 1 weist außerdem eine Austrittsöffnung 4 auf, durch welche der im Wesentlichen spiralförmig durch das das Innere 15 des Gehäuses 2 geführte und hierbei gereinigte Abgasstrom 6' wieder abgeführt wird. Die Austrittsöffnung 4 wird durch ein im Wesentlichen zylindrisches Tauchrohr 9 ausgebildet, welches mit einem offenen Endbereich 9a in das Innere 15 des Gehäuses 2 hineinragt. Wie in Fig.1 ersichtlich, ist an der Außenseite des Gehäuse-Deckenbereichs 2b ein Austrageelement 18 angeordnet. Das an ein nicht dargestelltes Transportrohr angeschlossene Austrageelement 18 lenkt den in vertikaler Richtung durch das Tauchrohr 9 strömenden gereinigten Abgasstrom 6' in eine z.B. horizontale Richtung um.

Die durch Zentrifugalkräfte an die Innenwandung des Gehäuses 2 geschleuderten Feststoffteilchen werden im Bodenbereich 2c des Gehäuses 2 gesammelt und durch eine Austragöffnung 11, beispielsweise in Form eines Ringspaltes, in einen angeschlossenen Abscheidebehälter 22 abgeführt, von wo aus eine Weiterverwertung erfolgen kann.

Um eine möglichst verwirbelungsfreie Strömung des Abgasstroms 6 durch das Innere 15 des Gehäuses 2 zu unterstützen, ist bevorzugterweise aber nicht zwingenderweise ein koaxial zur Zyklon-Längsachse 14 verlaufendes, zylindrisches Leitrohr 10 vorgesehen, welches sich vom Bodenbereich 2c bis zum Deckenbereich 2b erstreckt.

Die Förderung des Abgasstromes 6 kann entweder durch ein nicht dargestelltes nachgeschaltetes Sauggebläse oder einen vorgeschalteten nicht dargestellten Verdichter erfolgen.

Im vorliegenden Ausführungsbeispiel durchdringt das Tauchrohr 9 den Deckenbereich 2b des Gehäuses 2.

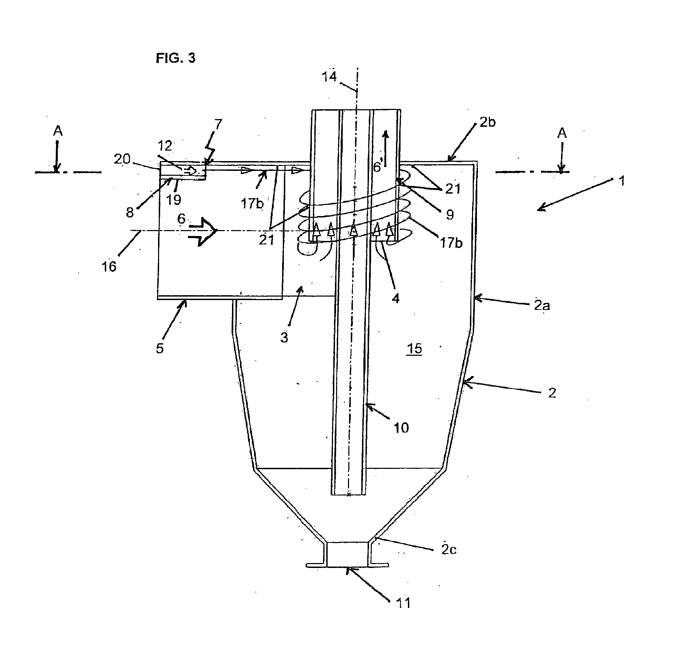

Eine strömungstechnisch bedingte Grenzschichtströmung 17, welche gegenüber dem mit Feststoffteilchen vermengten Abgasstrom 6 eine erhöhte Konzentration an Feststoffteilchen aufweist, bildet sich im Deckenbereich 2b sowie im Bereich des Manteloberfläche des Tauchrohrs 9 aus. Diese Bereiche des Innenwandungsabschnittes, an welchem sich die Grenzschichtströmung 17 ausbildet, werden der Einfachheit wegen mit 21 gekennzeichnet. In Fig.1 ist die Grenzschichtströmung 17 schematisch in Form des absoluten Massenstromes 17a dargestellt, Fig.3 zeigt die tatsächliche Bewegungsrichtung 17b der sich ausbildenden Grenzschichtströmung 17.

Wie in Fig.1 schematisch dargestellt, bewirken Turbulenzen im Inneren 15 des Zyklons, dass die in der Grenzschichtströmung 17 konzentriert vorhandenen Feststoffteilchen in die Eintrittsöffnung 4 befördert werden und den an und für sich gereinigten Abgasstrom 6' erneut verunreinigen.

Erfindungsgemäß ist daher mindestens eine Reingas 12 führende Reingasleitung 8 vorgesehen, welche in einen der Eintrittsöffnung 3 des Gehäuses 2 vorgelagerten Einmündungsbereich 7 der Abgasleitung 5 und somit in das Innere der Abgasleitung 5 einmündet. Als Reingas 12 wird vorzugsweise Luft eingesetzt.

Das Reingas 12 wird in weiterer Folge dem Innenwandungsabschnitt 21 des Gehäuses 2 zugeführt, an welchem sich ohne Zufuhr des Reingases 12 die gegenüber dem mit Feststoffteilchen vermengten Abgasstrom 6 erhöhte Konzentration an Feststoffteilchen aufweisende Grenzschichtströmung 17 ausbilden würde.

Die Zufuhr an den gewünschten Innenwandungsabschnitt 21 kann auf unterschiedliche Arten erfolgen.

So kann beispielsweise durch Wahl der Strömungsgeschwindigkeit des Reingases und der Wahl des Winkels 22 zwischen der Achse 16 der Abgasleitung und der Achse Reingasleitung bewirkt werden, dass das Reingas vom Abgasstrom so mitgerissen wird, dass es zum gewünschten Innenwandungsabschnitt 21 befördert wird.

Alternativ dazu können aber auch Leitvorrichtungen 13 vorgesehen sein (nicht gezeichnet), die eine entsprechende Umlenkung des Reingases bewirken.

Wie in Fig.1 ersichtlich, ist der Einmündungsbereich 7 für die Reingasleitung 8 an jener Querschnittshälfte der Abgasleitung 5 angeordnet, welche, betrachtet in einer der Längsachse 16 der Abgasleitung 5 folgenden Blickrichtung, jenem Abschnitt des Gehäuses 2 näher ist, welcher vom Tauchrohr 9 durchsetzt ist, im Falle des Ausführungsbeispiels gemäß Fig.1 somit dem Deckenbereich 2b.

Fig.3 zeigt eine besonders bevorzugte Ausführüngsvariante eines erfindungsgemäßen Zyklons, der gemäß die Reingasleitung 8 abschnittsweise einen Teilquerschnitt der Abgasleitung 5 bildet. Die Abgasleitung 5 ist in diesem Ausführungsbeispiel als Schacht 20 ausgebildet, innerhalb welchem eine Trennwandung 19 vorgesehen ist, welche das Reingas 12 vom Abgasstrom 6 trennt.

Die Trennwandung 19 endet vor der Eintrittsöffnung 3, kann jedoch auch bis zur Eintrittsöffnung 3 verlaufend ausgeführt sein, so dass in diesem Fall das Reingas dem Abgasstrom erst bei und nicht vor Eintritt in das Gehäuse 2 des Zyklons 1 zugeführt wird. Die Trennwandung 19 verläuft weiters vorzugsweise horizontal und parallel zur Wandung des Schachtelementes 20 bzw. parallel zur Strömungsrichtung des Abgasstromes 6. Da das Schachtelement 20 gemäß Fig.1 einen rechteckigen Querschnitt aufweist, ist die Trennwandung 19 als Platte ausgeführt, welche mit ihren Seitenkanten an zwei im Wesentlichen vertikal verlaufenden Seitenwandungen des Schachtelementes 20 abdichtend angrenzt.

In der in Fig.3 gezeigten Ausführungsvariante bilden Deckenbereich 2b und eine Seitenwandung der Abgasleitung 5 eine durchgehende Ebene, was die Ausbildung der Grenzschichtströmung durch das Reingas erleichtert.

Um eine möglichst optimale Anpassung des Reingasstroms 12 an den Abgasstrom 6 zu erzielen, ist es vorgesehen, dass der Reingasstrom 12 unmittelbar vor seinem Eintritt in das Gehäuse 2 im Wesentlichen parallel zur Strömungsrichtung des Abgasstroms 6 geführt wird.

In den vorliegenden Ausführungsbeispielen wird das Reingas 12 im Wesentlichen tangential in den Zyklon 1 eingeführt.

Versuche haben ergeben, dass eine optimale Entstaubung des Gaststromes 6 dann stattfindet, wenn die dem Abgasstrom 6 zugeführte Menge an Reingas 1-5%, vorzugsweise 2-3% des in das Gehäuse 2 eintretenden Gasvolumenstroms beträgt.

Eine besonders optimale Ausbildung der Grenzschichtströmung durch das Reingas ergibt sich, wenn die Strömungsgeschwindigkeit des Reingases 12 im Bereich des Eintritts, also im Bereich der Eintrittsöffnung 3, in den Zyklon 80% bis 120%, vorzugsweise 90% bis 110% der Strömungsgeschwindigkeit des Abgasstroms 6 beträgt.

### Bezugszeichenliste

- 1: Zyklon
- 2: Gehäuse
- 2a: Mantelbereich
- 2b: Deckenbereich
- 2c: Bodenbereich
- 2c': Bestandteil der Abgasleitung
- 3: Eintrittsöffnung
- 3a: letzter vollständiger Querschnitt der Abgasleitung normal zur Längsachse der Abgasleitung
- 4: Austrittsöffnung
- 5: Zufuhrleitung
- 6: Abgasstrom (ungereinigt)
- 6': Abgasstrom (gereinigt)
- 7: Einmündungsbereich des Reingasstromes in die Abgasleitung
- 8: Reingasleitung
- 9: Tauchrohr
- 10: Leitrohr
- 11: Austragöffnung (für Feststoffteilchen)
- 12: Reingasströmung
- 14: Längsachse des Gehäuses 2
- 15: Inneres des Gehäuses 2
- 16: Längsachse der Abgasleitung
- 17: Grenzschichtströmung
- 17a: schematische Darstellung des absoluten Massenstroms der Grenzschichtströmung
- 17b: Bewegungsrichtung der Grenzschichtströmung
- 18: Austragselement für den gereinigten Abgasstrom 6'
- 19: Trennwandung
- 20: Schachtelement
- 21: Innenwandungsabschnitt des Gehäuses 2
- 22: Winkel zwischen der Achse der Abgasleitung und der Achse Reingasleitung

## Patentansprüche

1. Zyklon (1) zur Abscheidung von Feststoffteilchen aus einem Abgasstrom (6), umfassend ein Gehäuse (2) mit einem vorzugsweise zumindest abschnittsweise zylindrischen Mantelbereich (2a), einem Deckenbereich (2b) und einem Bodenbereich (2c) sowie einer Eintrittsöffnung (3) zum Beschicken des Zyklons und eine in diese mündende Abgasleitung (5) für den mit Feststoffteilchen vermengten Abgasstrom (6), sowie einer Austragöffnung (11) für die aus dem Abgasstrom (6) abgeschiedenen Feststoffteilchen, wobei ein Tauchrohr (9) vorgesehen ist, welches den Deckenbereich (2b) oder den Bodenbereich (2c) durchsetzt und einen in das Innere (15) des Gehäuses (2) hineinragenden, als Austrittsöffnung (4) für den gereinigten Abgasstrom (6') aus dem Gehäuse (2) dienenden offenen Endbereich (9a) aufweist, wobei mindestens eine der Zufuhr von Reingas (12) dienende Reingasleitung (8) vorgesehen ist, welche entweder in Strömungsrichtung des Abgasstroms gesehen vor der Eintrittsöffnung (3) in einen in der Abgasleitung (5) vorgesehenen Einmündungsbereich (7) mündet oder direkt in die Eintrittsöffnung (3) mündet und welches Reingas (12) einem Innenwandungsabschnitt (21) des Gehäuses (2) zugeführt wird, an welchem sich ohne Zufuhr des Reingases (12) eine gegenüber dem mit Feststoffteilchen vermengten Abgasstrom (6) erhöhte Konzentration an Feststoffteilchen aufweisende Grenzschichtströmung ausbilden würde, **dadurch gekennzeichnet, dass** der Deckenbereich (2b) oder Bodenbereich (2c) eben in eine Seitenwandung der Abgasleitung (5) übergeht, um die Ausbildung einer Grenzschichtströmung aus Reingas an dem Innenwandungsabschnitt (21) zu gewährleisten, welche die eine erhöhte Konzentration an Feststoffteilchen aufweisende Grenzschichtströmung ersetzt.

2. Zyklon (1) nach Anspruch 1, **dadurch gekennzeichnet, dass** es sich bei dem Innenwandungsabschnitt (21) des Gehäuses (2), um jene Innenoberfläche des Zyklons (1) handelt, die gebildet wird durch den vom Tauchrohr (9) durchsetzten Decken- oder Bodenbereich (2b,2c) sowie den daran anschließenden, in das Innere (15) des Gehäuses (2) hineinragenden Mantel des Tauchrohres (9).

3. Zyklon (1) nach Anspruch 1 oder 2, **dadurch gekennzeichnet, dass** der Einmündungsbereich (7) für die Reingasleitung (8) an jener Querschnittshälfte der Abgasleitung (5) angeordnet ist, welche, betrachtet in einer der Längsachse (16) der Abgasleitung (5) folgenden Blickrichtung, jenem Abschnitt des -Gehäuses (2) näher ist, welcher vom Tauchrohr (9) durchsetzt wird.

4. Zyklon (1) nach einem der Ansprüche 1 bis 3, **dadurch gekennzeichnet, dass** im Bereich der Eintrittsöffnung (3) des Gehäuses (2) und/oder des Einmündungsbereichs (7) eine Leitvorrichtung (13) vorgesehen ist, durch welche das durch die Abgasleitung (5) geführte Reingas (12) in Richtung des Innenwandungsabschnittes (21) leitbar ist.

5. Zyklon (1) nach einem der Ansprüche 1 bis 4, **dadurch gekennzeichnet, dass** die Reingasleitung (8) zumindest abschnittsweise einen Teilquerschnitt der Abgasleitung (5) bildet und diese als Schachtelement (20) ausgebildet ist, wobei innerhalb des Schachtelementes (20) mindestens eine Trennwandung (19) angeordnet ist, welche das Reingas (12) vom Abgasstrom (6) trennt.

6. Zyklon (1) nach Anspruch **5, dadurch gekennzeichnet, dass** die mindestens eine Trennwandung (19) zumindest abschnittsweise parallel zu einer Längsachse (16) des Schachtelementes (20) verläuft, wobei das Schachtelement (20) vorzugsweise einen rechteckigen Querschnitt aufweist, und die Trennwandung (19) als Platte ausgeführt ist, welche mit ihren Seitenkanten an zwei im Wesentlichen vertikal verlaufenden Seitenwandungen des Schachtelementes (20) angrenzt.

7. Zyklon (1) nach einem der Ansprüche 1 bis 6, **dadurch gekennzeichnet, dass** dessen Deckenbereich (2b) oder Bodenbereich (2c) eben in eine Seitenwandung der Reingasleitung (8) übergeht.

8. Verfahren zur Abscheidung von Feststoffteilchen aus einem Abgasstrom (6) mittels eines Zyklons (1), wobei der in einer Abgasleitung (5) transportierte, abzuscheidende Feststoffteilchen enthaltende Abgasstrom (6) durch ein Gehäuse (2) des Zyklons (1) geführt und schließlich durch eine Austrittsöffnung (4) aus dem Gehäuse (2) abgeführt wird und im Zuge des Führens des Abgasstroms (6) durch das Gehäuse (2) die durch Zentrifugalkräfte an die Innenwandung des Gehäuses (2) geschleuderten Feststoffteilchen absinken und durch eine im Gehäuse (2) vorgesehene Abführöffnung (11) abgeführt werden, und wobei dem in der Abgasleitung (5) transportierten, die abzuscheidenden Feststoffteilchen enthaltenden Abgasstrom (6) vor oder bei Eintritt in das Gehäuse (2) Reingas (12) zugeführt wird, welches in weiterer Folge einem Innenwandungsabschnitt (21) des Gehäuses (2) zugeführt wird, an welchem sich ohne Zufuhr des Reingases eine gegenüber dem mit Feststoffteilchen vermengten Abgasstrom (6) erhöhte Konzentration an Feststoffteilchen aufweisende Grenzschichtströmung ausbilden würde, **dadurch gekennzeichnet, dass** das Reingas dem Strömungsverhalten des Abgasstroms (6) angepasst wird, was Strömungsrichtung und Strömungsgeschwindigkeit betrifft, wodurch an dem Innenwandungsabschnitt (21) eine Grenzschichtströmung aus Reingas ausgebildet wird, welche die eine erhöhte Konzentration an Feststoffteilchen aufweisende Grenzschichtströmung ersetzt.

9. Verfahren nach Anspruch 8, **dadurch gekennzeichnet, dass** das Reingas (12) vor dem Eintritt in das Gehäuse (2) zumindest abschnittsweise im Wesentlichen parallel zur Strömungsrichtung des Abgasstroms (6) geführt wird.

10. Verfahren nach einem der Ansprüche 8 oder 9, **dadurch gekennzeichnet, dass** das Reingas (12) im Wesentlichen tangential in das Zyklon-Gehäuse (2) geführt wird.

11. Verfahren nach einem der Ansprüche 8 bis 10, **dadurch gekennzeichnet, dass** das Reingas (12) eingeblasen wird.

12. Verfahren nach einem der Ansprüche 8 bis 11, **dadurch gekennzeichnet, dass** das Reingas (12) mittels einer dem Zyklon (1) nachgeschalteten Saugeinrichtung eingesaugt wird.

13. Verfahren nach einem der Ansprüche 8 bis 12, **dadurch gekennzeichnet, dass** die zugeführte Menge an Reingas (12) 1-5%, vorzugsweise 2-3% (Volumsprozent) des in das Gehäuse (2) eintretenden, die abzuscheidenden Feststoffteilchen enthaltenen Abgasstroms (6) beträgt.

14. Verfahren nach einem der Ansprüche 8 bis 13, **dadurch gekennzeichnet, dass** als Reingas (12) Luft eingesetzt wird.

15. Verfahren nach einem der Ansprüche 8 bis 14, **dadurch gekennzeichnet, dass** die Temperatur des Reingases (12) geringer ist als die Temperatur des Abgasstroms (6).

16. Verfahren nach einem der Ansprüche 8 bis 15, **dadurch gekennzeichnet, dass** die Strömungsgeschwindigkeit des Reingases (12) im Bereich des Eintritts in den Zyklon 80% bis 120%, vorzugsweise 90% bis 110% der Strömungsgeschwindigkeit des Abgasstroms (6) beträgt.

## Claims

1. A cyclone (1) for separating solid particles from an exhaust gas flow (6), comprising a housing (2) with a jacket area (2a) that is preferably cylindrical at least in some sections, a cover area (2b) and a bottom area (2c), an inlet opening (3) for feeding the cyclone, and an exhaust gas line (5) opening into said inlet opening for the exhaust gas flow (6) mixed with solid particles, and a discharge opening (11) for the solid particles separated from the exhaust gas flow (6), wherein an immersion pipe (9) is provided which passes through the cover area (2b) or the bottom area (2c), and comprises an open end area (9a) which protrudes into the interior (15) of the housing (2) and which is used as an outlet opening (4) for the purified exhaust gas flow (6') from the housing (2), wherein at least one pure gas line (8) for the supply of pure gas (12) is provided, with said pure gas line either opening into an inlet area (7) provided in the exhaust gas line (5) before the inlet opening (3) as viewed in the flow direction of the exhaust gas flow or opening directly into the inlet opening (3), and said pure gas (12) being fed to an inner wall section (21) of the housing (2), at which inner wall section (21) a boundary layer flow having an increased concentration of solid particles as compared to the exhaust gas flow (6) mixed with solid particles would develop if the pure gas (12) were not supplied, **characterized in that** the cover area (2b) or the bottom area (2c) converge in a planar manner into a side wall of the exhaust gas line (5) in order to ensure the formation of a boundary layer flow of pure gas at the inner wall section (21), which boundary layer flow replaces the boundary layer flow having an increased concentration of solid particles.

2. A cyclone (1) according to claim 1, **characterized in that** the inner wall section (21) of the housing (2) concerns the inner surface of the cyclone (1) which is formed by the cover or bottom area (2b, 2c) penetrated by the immersion pipe (9) and the adjacent jacket of the immersion pipe (9) which protrudes into the interior (15) of the housing (2).

3. A cyclone (1) according to claim 1 or 2, **characterized in that** the inlet area (7) for the pure gas line (8) is arranged on the cross-sectional half of the exhaust gas line (5) which, when viewed in a direction of view following the longitudinal axis (16) of the exhaust gas line (5), is closer to the section of the housing (2) which is penetrated by the immersion pipe (9).

4. A cyclone (1) according to one of the claims 1 to 3, **characterized in that** a guide apparatus (13) is provided in the area of the inlet opening (3) of the housing (2) and/or the inlet area (7), by means of which the pure gas (12) guided through the exhaust gas line (5) can be guided in the direction of the inner wall section (21).

5. A cyclone (1) according to one of the claims 1 to 4, **characterized in that** the pure gas line (8) forms a partial cross-section of the exhaust gas line (5) at least in sections and it is arranged as a shaft element (20), with at least one separation wall (19) being arranged within the shaft element (20) which separates the pure gas (12) from the exhaust gas flow (6).

6. A cyclone (1) according to claim 5, **characterized in that** the at least one separation wall (19) extends at least in sections parallel to a longitudinal axis (16) of the shaft element (20), with the shaft element (20) preferably comprising a rectangular cross-section, and the separation wall (19) being arranged as a plate which is adjacent with its lateral edges to two side walls of the shaft element (20) which extend substantially vertically.

7. A cyclone (1) according to one of the claims 1 to 6, **characterized in that** its cover area (2b) or bottom area (2c) converges in a planar manner into a side wall of the pure gas line (8).

8. A method for separating solid particles from an exhaust gas flow (6) by means of a cyclone (1), with the exhaust gas flow (6) which is conveyed in an exhaust gas line (5) and contains the solid particles to be separated being guided through a housing (2) of the cyclone (1) and finally being removed out of the housing (2) through an outlet opening (4), with the solid particles ejected against the inner wall of the housing (2) by the centrifugal forces descending in the course of the guidance of the exhaust gas flow (6) through the housing (2) and being discharged through a discharge opening (11) provided in the housing (2), and with pure gas (12) being supplied before or during entrance into the housing (2) to the exhaust gas flow (6) conveyed in the exhaust gas line (5) and containing the solid particles to be separated, which pure gas is subsequently supplied to an inner wall section (21) of the housing (2), on which a boundary layer flow would form which without the supply of the pure gas would have a solid particle concentration which is increased over the exhaust gas flow (6) mixed with the solid particles, **characterized in that** the pure gas is adjusted to the flow behaviour of the exhaust gas flow (6) concerning direction and speed of flow, by means of which a boundary layer flow of pure gas is formed on the inner wall section (21), which boundary layer flow replaces the boundary layer flow having an increased concentration of solid particles.

9. A method according to claim 8, **characterized in that** prior to the entrance into the housing (2) the pure gas (12) is guided at least in sections substantially parallel to the direction of flow of the exhaust gas flow (6).

10. A method according to one of the claims 8 or 9, **characterized in that** the pure gas (12) is guided substantially tangentially into the cyclone housing (2).

11. A method according to one of the claims 8 to 10, **characterized in that** the pure gas (12) is injected.

12. A method according to one of the claims 8 to 11, **characterized in that** the pure gas (12) is sucked in by means of a suction device disposed downstream of the cyclone (1).

13. A method according to one of the claims 8 to 12, **characterized in that** the supplied quantity of pure gas (12) is 1 to 5%, preferably 2 to 3% (percent by volume) of the exhaust gas flow (6) entering the housing (2) and containing the solid particles to be separated.

14. A method according to one of the claims 8 to 13, **characterized in that** air is used as pure gas (12).

15. A method according to one of the claims 8 to 14, **characterized in that** the temperature of the pure gas (12) is lower than the temperature of the exhaust gas flow (6).

16. A method according to one of the claims 8 to 15, **characterized in that** the flow speed of the pure gas (12) in the region of the entrance into the cyclone is 80% to 120%, preferably 90% to 110% of the flow speed of the exhaust gas flow (6).

## Revendications

1. Cyclone (1) pour séparer des particules solides d'un flux d'effluent gazeux (6), comprenant un corps (2) avec une zone d'enveloppe au moins partiellement cylindrique (2a), une zone de paroi supérieure (2b) et une zone de fond (2c) et avec une ouverture d'entrée (3) pour remplir le cyclone, et une conduite d'effluent gazeux (5) débouchant dans celle-ci pour le flux d'effluent gazeux (6) mêlé de particules solides, et avec une ouverture de sortie (11) pour les particules solides séparées du flux d'effluent gazeux (6), dans lequel est prévu un tuyau plongeur (9) qui traverse la zone de paroi supérieure (2b) ou la zone de fond (2c) et présente une partie d'extrémité (9a) ouverte qui dépasse dans l'intérieur (15) du corps (2) et sert d'ouverture de sortie (4) pour que le flux d'effluent gazeux purifié (6') sorte du corps (2), dans lequel est prévue au moins une conduite de gaz pur (8) servant d'arrivée de gaz pur (12) qui soit débouche avant l'ouverture d'entrée (3), vu dans le sens d'écoulement du flux d'effluent gazeux, dans une zone d'embouchure (7) prévue dans la conduite d'effluent gazeux (5), soit débouche directement dans l'ouverture d'entrée (3), et qui amène du gaz pur (12) dans une section de paroi intérieure (21) du corps (2) dans laquelle un écoulement de couche limite contenant une concentration accrue de particules solides par rapport au flux d'effluent gazeux (6) mêlé de particules solides se créerait sans apport de gaz pur (12), **caractérisé en ce que** la zone de paroi supérieure (2b) ou la zone de fond (2c) se raccorde sans différence de niveau à une paroi latérale de la conduite d'effluent gazeux (5) afin de garantir la formation sur la section de paroi intérieure (21) d'un écoulement de couche limite de gaz pur qui remplace l'écoulement de couche limite contenant une concentration accrue de particules solides.

2. Cyclone (1) selon la revendication 1, **caractérisé en ce que** la section de paroi intérieure (21) du corps (2) est la surface intérieure du cyclone (1) qui est formée par la zone de paroi supérieure ou de fond (2b, 2c) que traverse le tuyau plongeur (9) et par l'enveloppe du tuyau plongeur (9) qui lui fait suite et qui plonge dans l'intérieur (15) du corps (2).

3. Cyclone (1) selon la revendication 1 ou 2, **caractérisé en ce que** la zone d'embouchure (7) de la conduite de gaz pur (8) est disposée dans la moitié de section de la conduite d'effluent gazeux (5) qui est la plus proche, vue suivant l'axe longitudinal (16) de la conduite d'effluent gazeux (5), de la partie du corps (2) que traverse le tuyau plongeur (9).

4. Cyclone (1) selon l'une des revendications 1 à 3, **caractérisé en ce qu'**il est prévu au niveau de l'ouverture d'entrée (3) du corps (2) et/ou de la zone d'embouchure (7) un dispositif de guidage (13) par lequel le gaz pur (12) guidé à travers la conduite d'effluent gazeux (5) peut être guidé en direction de la section de paroi intérieure (21).

5. Cyclone (1) selon l'une des revendications 1 à 4, **caractérisé en ce que** la conduite de gaz pur (8) forme au moins en partie une partie de section de la conduite d'effluent gazeux (5) et celle-ci est conçue comme un élément de gaine (20), au moins une cloison de séparation (19) qui sépare le gaz pur (12) du flux d'effluent gazeux (6) étant disposée à l'intérieur de l'élément de gaine (20).

6. Cyclone (1) selon la revendication 5, **caractérisé en ce que** l'au moins une cloison de séparation (19) passe au moins en partie parallèlement à un axe longitudinal (16) de l'élément de gaine (20), l'élément de gaine (20) présentant de préférence une section rectangulaire et la cloison de séparation (19) étant réalisée comme une plaque dont les bords latéraux sont contigus de deux parois latérales sensiblement verticales de l'élément de gaine (20).

7. Cyclone (1) selon l'une des revendications 1 à 6, **caractérisé en ce que** sa zone de paroi supérieure (2b) ou sa zone de fond (2c) est suivie sans changement de niveau d'une paroi latérale de la conduite de gaz pur (8).

8. Procédé pour séparer des particules solides d'un flux d'effluent gazeux (6) au moyen d'un cyclone (1), dans lequel le flux d'effluent gazeux (6) contenant les particules solides à séparer transporté dans une conduite d'effluent gazeux (5) est guidé à travers un corps (2) du cyclone (1) et extrait finalement du corps (2) à travers une ouverture de sortie (4) et, au cours du passage du flux d'effluent gazeux (6) à travers le corps (2), les particules solides projetées par la force centrifuge sur la paroi intérieure du corps (2) tombent et sont évacuées par une ouverture d'évacuation (11) prévue dans le corps (2), et dans lequel est apporté au flux d'effluent gazeux (6) contenant les particules solides à séparer transporté dans la conduite d'effluent gazeux (5), avant ou au niveau de l'entrée dans le corps (2), du gaz pur (12) qui est ensuite amené vers une section de paroi intérieure (21) du corps (2) sur laquelle un écoulement de couche limite contenant une concentration accrue de particules solides par rapport au flux d'effluent gazeux (6) mêlé de particules solides se créerait sans apport de gaz pur (12), **caractérisé en ce que** le gaz pur est adapté au comportement d'écoulement du flux d'effluent gazeux (6) en ce qui concerne le sens et la vitesse d'écoulement, de sorte qu'il se forme sur la section de paroi intérieure (21) un écoulement de couche limite de gaz pur qui remplace un écoulement de couche limite contenant une concentration accrue de particules solides.

9. Procédé selon la revendication 8, **caractérisé en ce que** le gaz pur (12) est amené, avant d'entrer dans le corps (2), dans un sens sensiblement parallèle, au moins en partie, au sens d'écoulement du flux d'effluent gazeux (6).

10. Procédé selon l'une des revendications 8 ou 9, **caractérisé en ce que** le gaz pur (12) est amené de façon sensiblement tangente dans le corps (2) du cyclone.

11. Procédé selon l'une des revendications 8 à 10, **caractérisé en ce que** le gaz pur (12) est injecté.

12. Procédé selon l'une des revendications 8 à 11, **caractérisé en ce que** le gaz pur (12) est aspiré au moyen d'un dispositif d'aspiration monté en aval du cyclone (1).

13. Procédé selon l'une des revendications 8 à 12, **caractérisé en ce que** la quantité de gaz pur (12) apportée correspond à 1 à 5 %, de préférence 2 à 3 % (en pourcentage du volume) du flux d'effluent gazeux (6) contenant les particules solides à séparer qui entre dans le corps (2).

14. Procédé selon l'une des revendications 8 à 13, **caractérisé en ce que** le gaz pur (12) utilisé est de l'air.

15. Procédé selon l'une des revendications 8 à 14, **caractérisé en ce que** la température du gaz pur (12) est plus basse que celle du flux d'effluent gazeux (6).

16. Procédé selon l'une des revendications 8 à 15, **caractérisé en ce que** la vitesse d'écoulement du gaz pur (12) à l'entrée dans le cyclone correspond à 80 % à 120 %, de préférence 90 % à 110 % de la vitesse d'écoulement du flux d'effluent gazeux (6).
